# EUROPÄISCHE PATENTANMELDUNG

(11) **EP 1 203 855 A2**
(43) Veröffentlichungstag der Anmeldung: **08.05.2002**
(21) Anmeldenummer: 01126112.0
(22) Anmeldetag: 02.11.2001
(51) Int. Cl.: E04F 15/04, B32B 21/13

(54) **Plattenelement**

(30) Priorität: 03.11.2000 DE 20018817 U
(71) Anmelder: GPM Gesellschaft für Produkt Management mbH, 17335 Strasburg (DE)
(72) Erfinder: Fanselow, Eckhard, 17337 Blumenhagen (DE)
(74) Vertreter: Rupprecht, Kay, Dipl.-Ing.

(57) **Zusammenfassung**

Die Erfindung betrifft ein Plattenelement mit einem horizontalen Aufbau aus wenigstens zwei fest miteinander verbundenen Lagen (10, 10') eines Bambusmaterials, wobei jede Lage (10, 10') aus unidirektional ausgerichteten und fest miteinander verbundenen Stäbchen (20, 20') besteht, und die Faserrichtung (30, 30') von wenigstens zwei der Lagen (10, 10') kreuzweise zueinander verlaufen, sowie die Dicke (12) wenigstens einer Lage (10, 10') im wesentlichen der Dicke des Stäbchens entspricht, so daß eine Verbesserung der physikalisch-technischen Eigenschaften, wie Beständigkeit gegen Klimaschwankungen, Erhöhung der Bruchfestigkeit und Verbesserung der Weiterverarbeitbarkeit, über die Verwendung im Bodenbelagsbereich hinaus unter wirtschaftlichen, technischen, ästhetischen und materialökonomischen Gesichtspunkten gewährleistet ist.

## Beschreibung

Die Erfindung betrifft ein Plattenelement, mit einem horizontalen Aufbau aus wenigstens zwei fest miteinander verbundenen Lagen eines Bambusmaterials.

Aus dem Stand der Technik sind Bambusdielen bekannt, welche in der Dielen- und Parkettverlegung, kompromißweise auch als Diele im Bereich des Innenausbaus Verwendung finden. Im Parkettbereich ist dabei eine traditionelle Verlegung durch Verklebung auf den tragenden Strukturen des Bodens (Dielen oder Schalung) erforderlich. Bodenbeläge aus Bambusmaterial sind als außerordentlich trittfest, wasserresistent, strapazierfähiger als Hartholz und zudem noch schwerer entflammbar bekannt.

Bambusdielen werden bislang aus mindestens drei Lagen Bambusstäbchen aufgebaut, welche in einem entsprechenden Fertigungs- und Aufbereitungsverfahren aus den Bambusstangen gewonnen werden. Die Faserrichtung dieses mehrlagigen Aufbaus ist bisher eindimensional. Gerade dieser Aufbau macht eine Bambusdiele aber anfällig für Verwerfungen bei Klimaschwankungen, bei zu den übereinanderliegenden vertikalen Leimfugen liegt außerdem der ungünstigste Fall für die Haltbarkeit für die Verleimung in Querrichtung der Diele vor. Ein idealer Stoßversatz auf das Mittelmaß der Bambusstäbchen in ihrer Länge und Breite kann im derzeitigen Herstellungsprozeß nicht gewährleistet werden, wodurch keine gleichbleibenden physikalischen und statischen Eigenschaften gewährleistet sind. Ein besonderes Design der Bambusdielen, ähnlich dem der Tropenhölzer, kann nur durch einlagige Ausrichtung der Bambusstäbchen senkrecht zur Oberfläche der Diele erzielt werden, was allerdings die Zugfestigkeit nicht nur in Quer- sondern auch in Längsrichtung der Diele erheblich herabsetzt.

Die bisherigen Bambusdielen sind in einer Größe bis zu 1.000 x 100 mm herstellbar. Die Dicke ist von der Anzahl der Schichten und der Stäbchendicke abhängig, wobei eine beliebige Erweiterung der Dicke jedoch aus verfahrenstechnischen Gründen stark begrenzt ist. Die Dicke wird nicht größer sein können als die Breite der Dielen. Die relativ kleine Dimensionierung der Dielen schränkt damit die Verwendung auf den Bodenbelagsbereich, wie Dielen und Parkettverlegung, ein und kann nur kompromißweise auf die Verwendung im Bereich des Innenausbaus und der Möbelfertigung erweitert werden. Hier sind Längen erforderlich, die der Raumhöhe entsprechen. Auch ist eine schwimmende Verlegung eines Dielen- oder Parkettbodens aus Bambusmaterial bei Einhaltung der üblichen Qualitätsstandards nicht möglich. Parkettafeln sind nur bei gesonderter Bearbeitung der Dielen aus diesen herstellbar, was allerdings einen zusätzlichen technischen Aufwand durch Einbringung von Querstücken zur Ableitung des Kraftflusses in die Fläche bedeuten würde.

Zwar ist versucht worden, Bambusplatten aus mehreren Lagen gesperrt zueinander verlaufender Bambusdielen herzustellen, die maximal 1.000 x 1.000 mm groß sein könnten. Das dabei entstehende Plattenelement würde aber für viele Anwendungen wiederum zu stark sein. Bei der Herstellung treten außerdem verschiedene technische Probleme auf, die auf den besonderen Eigenschaften des natürlichen Rohstoffes Bambus beruhen.

Genauso wie Holz ist Bambus nur auf eine Maßgenauigkeit herstellbar, die ein zusätzliches Dickenhobeln jeder Diele erforderlich macht. Aber auch bei diesem Vorgang dabei bleiben Stärkendifferenzen innerhalb der Diele bestehen, die sich über den Aufbau einer Bambusplatte aus mehreren Lagen von Dielen aufsummieren und auch durch Leimfugen nicht auszugleichen sind. Das bedeutet, daß keine vollflächige Verleimung auftritt und Produktfehler bleiben. Durch die besondere Elastizität des Bambusmaterials führt auch der Einsatz starker Pressen nicht zu akzeptablen Maßtoleranzen. Zudem können sich unter starken Druck geschlossene Leimfugen wider öffnen und Fehlverleimungen entstehen. Diese Fehlverleimungen sind aber für die Verwendung einer Bambusplatte im Innenausbau oder in der Möbelfertigung nicht tolerierbar.

Ein anderer Versuch der Erweiterung der Länge der Dielen auf ein Maß, wie bei den Platten mit 2.500 mm Länge üblich, würde ein Aneinanderleimen der Dielen in ihrer Länge als Stumpfverleimung (offener Stoß oder Mini-Zinkenverleimung) bedeuten. Nachteilig hieran ist allerdings wieder das Auftreten von Bearbeitungstoleranzen, eine erhebliche Erhöhung der Bearbeitungskosten und eine zudem sichtbare Unterbrechung der Materialstrukturen. Die technische Realisierung einer solchen Verbindung ist mit einem so hohen Ausrüstungs- und Zeitaufwand verbunden, daß dieses Verfahren wirtschaftlich unrentabel ist. Eine zufriedenstellende Lösung zur Verwendung von Bambusmaterial in Form von Plattenelementen hinreichender Größe, insbesondere mit dem Ziel der Erschließung weiterer Verwendungsbereiche, wurde deshalb trotz dieser Versuche nicht gefunden.

Es ist deshalb Aufgabe der vorliegenden Erfindung, Plattenelemente aus Bambusmaterial bereit zu stellen, deren Aufbau die Erweiterung der Dimensionen eines Plattenelementes, bei gleichzeitiger Verbesserung der physikalisch-technischen Eigenschaften, wie Beständigkeit gegen Klimaschwankungen, Erhöhung der Bruchfestigkeit und Verbesserung der Weiterverarbeitbarkeit, über die Verwendung im Bodenbelagsbereich hinaus unter wirtschaftlichen, technischen, ästhetischen und materialökonomischen Gesichtspunkten gewährleistet.

Diese Aufgabe wir in optimaler Weise durch ein Plattenelement gelöst, bei dem jede Lage aus unidirektional ausgerichteten und fest miteinander verbundenen Bambusstäbchen besteht, und bei dem die Faserrichtung von wenigstens zwei der Lagen kreuzweise zueinander verlaufen, sowie die Dicke wenigstens einer Lage im wesentlichen der Dicke eines Bambusstäbchens entspricht.

Ein wesentlicher Punkt der vorliegenden Erfindung besteht darin, daß durch die nunmehr kreuzweise zueinander verlaufenden Faserrichtungen wenigstens zweier Lagen eine wesentliche Erhöhung der Bruch- und Biegefestigkeit der Plattenelemente erreicht werden kann. Dadurch sind Platten mit einer Größe von bis zu 2.500 x 1.250 mm herstellbar, welche bei entsprechender Maschinentechnik auch größer dimensioniert werden können. Die einzelnen Lagen des Aufbaus bestehen dabei aus einem einschichtigen 'Teppich' aus Bambusstäbchen, welche fest miteinander verbunden (verleimt) und unidirektional ausgerichtet sind. Durch die kreuzweise Führung der Faserrichtung der Lagen haben thermische Einflüsse nunmehr homogene Spannungsverhältnisse in der Fläche der Platte zur Folge. Ein entsprechender Stoßversatz der Bambusstäbchen in Längs- und Querrichtung zueinander spielt bei dieser Anordnung gegenüber den aus dem Stand der Technik bekannten Dielen keine Rolle mehr. Insbesondere werden vertikale Fugen als potentielle Bruchstellen vermieden. Durch die kreuzweise Anordnung der Bambusstäbchen innerhalb des Plattenelementes wird die geringe Abhebefestigkeit des Bambus quer zur Faserrichtung ausgeglichen. Durch die geringe Dicke jeder Lage, die im wesentlichen der Dicke eines Bambusstäbchens entspricht, werden bei gleichzeitig verbesserten statischen Eigenschaften geringere Mindestdicken des Plattenelementes möglich. Gleichzeitig kann durch Schichtung beliebig vieler Lagen aus einschichtigen 'Teppichen' aus Bambusstäbchen die Dicke eines Plattenelementes beliebig variiert werden. Der neuartige Aufbau des Plattenelementes gewährleistet somit Dimensionen im Bereich mehrerer Meter, welche nur noch von den technischen Parametern der dazu verwendeten Ausrüstung abhängig sind. Realisierbar sind nunmehr Abmessungen, wie sie bisher nur bei Sperr- oder Leimholz, Tischler-, Massivholz-, Faser- , Span- und Gipskartonplatten erreichbar sind. Damit stellen die in Rede stehenden Plattenelemte einen Werkstoff dar, aus dem durch entsprechende Weiterverarbeitung viele Zwischen- und Endprodukte herstellbar sind.

Es schließen sich damit weitere Verwendungen wie Innenausbau, Trockenbau, Raumgestaltung, Möbelherstellung, Bauelemente und andere an. Die verbesserten Eigenschaften sind mit denen von Sperrholz gegenüber dem natürlich gewachsenen Holz vergleichbar. Aus den Plattenelementen lassen sich durch entsprechende Bearbeitungsverfahren direkt Parkettafeln herstellen, die durch den verbesserten Aufbau gegenüber den Dielen aus Bambusmaterial auch schwimmend verlegt werden können, da eine Verwerfung des Materials bei sachgerechtem Einbau nicht auftritt. Zudem ist der Verarbeitungskomfort bei Verlegung gegenüber dem der Bambusdielen stark verbessert.

Weitere Ausführungsformen der Erfindung ergeben sich aus den Unteransprüchen.

Bevorzugterweise werden Plattenelemente so aufgebaut, daß die Ausrichtung der Bambusstäbchen einer oder mehrerer Lagen parallel zur Plattenoberfläche verläuft. Diese Art der Ausrichtung der Bambusstäbchen läßt zunächst eine entsprechend strukturierte Gestaltung der Plattenoberfläche zu, zum anderen ist diese Ausrichtung aber auch Voraussetzung zur Erreichung einer besonderen Stabilität des Plattenelementes in der Plattenebene. Eine kreuzweise Führung der Faserrichtung einzelner Lagen von Bambusstäbchen ist in diesem Fall auch nur im wesentlichen parallel zur Plattenoberfläche sinnvoll.

Eine weitere strukturierte Gestaltung der Oberfläche eines Plattenelementes ist in bevorzugter Weise durch die Ausrichtung der Bambusstäbchen einer oder mehrerer Lagen senkrecht zur Oberfläche des Plattenelementes erzielbar. Die üblicherweise gewünschte Stabilität eines Plattenelementes in seiner Horizontalen bezüglich Zug- und Druckfestigkeit kann durch die Kombination einer oder mehrerer Lagen senkrecht zur Oberfläche geführter Bambusstäbchen zusammen mit einer oder mehrerer Lagen parallel zur Plattenoberfläche verlaufender Bambusstäbchen erzielt werden. Abhängig vom speziellen Design der Oberfläche eines Plattenelementes und seinen gewünschten physikalisch-technischen Eigenschaften sind in diesem Sinne beliebige Kombinationsmöglichkeiten in der Führung der Faserrichtung einzelner Lagen des Aufbaus eines Plattenelementes denkbar.

Die physikalisch-technischen Eigenschaften eines Plattenelementes aus einem Bambusmaterial und dem hier geschilderten neuartigen Aufbau können dadurch beeinflußt werden, daß die einzelnen Lagen von Bambusstäbchen eine voneinander unterschiedliche Dicke aufweisen. Im Umfang der Variationsmöglichkeiten der Dicke der aus den Bambusstangen gewonnenen Bambusstäbchen können dem Plattenelement individuelle Eigenschaften hinsichtlich Temperaturbeständigkeit, Quellverhalten und Hauptbelastungsrichtungen mitgegeben werden.

Eine besondere Stabilität in Zug- und Druckrichtung eines Plattenelementes wird in bevorzugter Weise dadurch erreicht, daß die Faserrichtung von wenigstens zwei der Lagen in einem senkrechten Winkel zueinander verlaufen. Die Führung der Faserrichtung in dieser Art senkrecht zueinander sichert die Hauptachsen von Zug- und Druckbelastungen ab, welche üblicherweise bei Verwendung der in Rede stehenden Plattenelemente, insbesondere im Bodenbelagsbereich, auftreten.

Eine besondere Verstärkung eines Plattenelementes wird vorzugsweise dadurch erreicht, daß eine oder mehrere Lagen aus einem anderen Material, z. B. Holz, bestehen. Eine derartige verstärkende Lage kann unter anderem dann sinnvoll sein, wenn besondere Anforderungen an die Stabilität eines Plattenelementes gestellt werden müssen. Dies könnte bei großflächig und schwimmend verlegten Parkettafeln der Fall sein, könnte aber auch genauso gut im Verschalungsbau Anwendung finden. Denkbar wären natürlich auch Anwendungen im Bootsbau oder im Leichtbau

Vorgefertigte Plattenelemente zum direkten Verbau werden vorzugsweise an einer Längsseite eine Nut und an einer gegenüberliegenden Längsseite eine Feder zur Verbindung aneinander angrenzender Plattenelemente aufweisen. Diese Art der Verbindung macht eine leichte Handhabung der Plattenelemente insbesondere im Innenausbau, d. h. im Bodenbelagsbereich bei schwimmend verlegten Parkettböden oder auch Deckenverkleidungen möglich.

Eine weitere vorzugsweise Verbindung von Plattenelementen wird dadurch erzielt, daß an einer Längsseite eine Stufe und an einer gegenüberliegenden Seite eine gegenläufige Stufe zur Verbindung aneinander angrenzender Plattenelemente angebracht ist. Diese Art der Verbindung ist fertigungstechnisch besonders einfach anzubringen und wird insbesondere bei Plattenelementen in geringer Dicke bevorzugt angewendet.

Plattenelemente mit dem hier beschriebenen Aufbau werden in bevorzugter Weise als alternativer Werkstoff zu Holz im Innenausbau, der Möbelfertigung und in verwandten Bereichen eingesetzt.

Nachfolgend wird die Erfindung anhand eines Ausführungsbeispieles beschrieben, welches anhand.der Abbildung näher erläutert wird. Es zeigen:
- Figur 1: eine geschnittene perspektivische Ansicht eines erfindungsgemäßen Plattenelementes (40); und
- Figur 2: eine perspektivische Ansicht einer Diele gemäß dem Stand der Technik.

Für gleiche oder gleichwirkende Teile werden im folgenden gleiche Bezugsziffern verwendet. Dies gilt insbesondere für die verschiedenen Lagen (10,10',10'') von Bambusstäbchen, die Bambusstäbchen (20,20'), die verschiedenen Faserrichtungen (30,30') und die Längsseiten (44,44') des Plattenelementes (40).

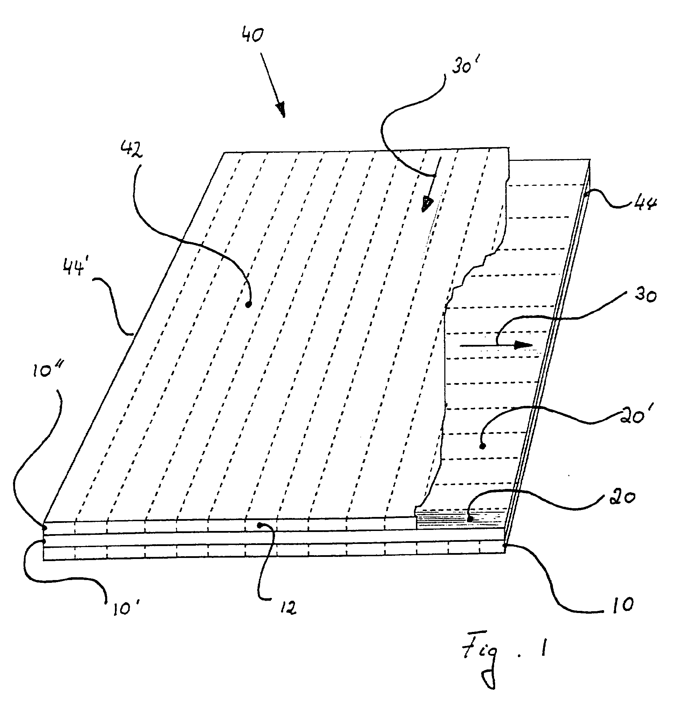

Figur 1 zeigt eine geschnittene perspektivische Ansicht eines erfindungsgemäßen Plattenelementes (40), welches aus drei Lagen (10) aus in Faserrichtung (30) kreuzweise verlaufenden Bambusstäbchen (20) besteht. Diese Lagen (10) werden auch als 'Teppiche' aus Bambusstäbchen (20) bezeichnet und weisen eine Dicke (12) auf, die im wesentlichen der eines Bambusstäbchens (20) entspricht. Die Plattenoberfläche (42) des Plattenelementes (40) ist längsseitig strukturiert und kann, bei direkter Verwendung zum Verbau als Bodenbelag, an seinen Längsseiten (44) mit einer Nut- und Federverbindung ausgestattet sein. Dieses Ausführungsbeispiel zeigt eine Verschränkung der Faserrichtungen (30) der einzelnen Lagen (10) von Bambusstäbchen (20) unter einem Winkel von 90° Grad. In diesen beiden Hauptrichtungen wird damit eine besondere Stabilität auf Bezug- und Schubkräfte erreicht. Die Dicke eines einzelnen Bambusstäbchens (20) beträgt im Minimum etwa 3 mm, wodurch sich für dieses Plattenelement (40) eine Gesamtaufbauhöhe aus der Dicke (12) jeder der Lagen (10) von 9 mm ergibt. Das Plattenelement (40) wäre somit, unter Anbringung einer Nut- und Federverbindung, als Parkettafel für die schwimmende Verlegung im Bodenbereich geeignet. Der Aufbau des Plattenelementes (40) könnte, wie im vorhinein beschrieben, durch weitere Lagen (10) aus Bambusstäbchen (20) oder aus einem anderen Material, z. B. Holz erweitert werden, wobei auch der Faserrichtung entsprechenden Vorgaben der zukünftigen Verwendung angepaßt werden können. Wird z. B. eine besondere Zugfestigkeit in einer bevorzugten Richtung gewünscht, kann in dieser Richtung der zwischen den Faserrichtungen (30) einzelner Lagen (10) eingeschlossene Winkel auch zwischen 0° und 90° Grad variieren. Durch eine die Oberfläche (42) des Plattenelementes (40) bildende Lage (10) von senkrecht zur Plattenoberfläche (42) orientierten Bambusstäbchen (20) wäre auch die Möglichkeit einer andersartigen Strukturierung des Plattenelementes (40) gegeben.

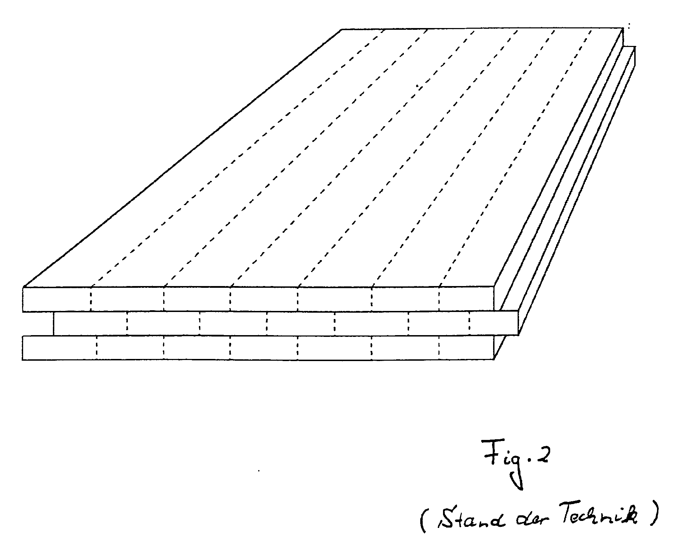

Figur 2 zeigt eine perspektivische Ansicht einer Diele gemäß dem Stand der Technik. Zu erkennen ist hier die mit den entsprechenden Nachteilen behaftete eindimensionale Ausrichtung der Bambusstäbchen in dreischichtiger Überlappung.

An dieser Stelle sei darauf hingewiesen, daß alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 10,10',10: Lage
- 12: Dicke
- 20,20': Bambusstäbchen
- 30,30': Faserrichtung
- 40: Plattenelement
- 42: Plattenoberfläche
- 44,44': Längsseite

## Patentansprüche

1. Plattenelement, mit einem horizontalen Aufbau aus wenigstens zwei fest miteinander verbundenen Lagen (10,10') eines Bambusmaterials,
**dadurch gekennzeichnet, daß**
jede Lage (10,10') aus unidirektional ausgerichteten und fest miteinander verbundenen Stäbchen (20,20') besteht, und die Faserrichtung (30,30') von wenigstens zwei der Lagen (10,10') kreuzweise zueinander verlaufen, sowie die Dicke (12) wenigstens einer Lage (10,10') im wesentlichen der Dicke eines Stäbchens entspricht.

2. Plattenelement nach Anspruch 1,
**dadurch gekennzeichnet, daß**
die Ausrichtung der Stäbchen (20,20') einer oder mehrerer Lagen (10,10') parallel zur Plattenoberfläche (42) verläuft.

3. Plattenelement nach Anspruch 1,
**dadurch gekennzeichnet, daß**
die Ausrichtung der Stäbchen (20,20') einer oder mehrerer Lagen (10,10') senkrecht zur Oberfläche (42) des Plattenelementes (40) verläuft.

4. Plattenelement nach einem der vorstehenden Ansprüche,
**dadurch gekennzeichnet, daß**
die einzelnen Lagen (10,10') eine voneinander unterschiedliche Dicke aufweisen.

5. Plattenelement nach einem der vorstehenden Ansprüche,
**dadurch gekennzeichnet, daß**
die Faserrichtung (30,30') von wenigstens zwei der Lagen (10,10') in einem senkrechten Winkel zueinander verläuft.

6. Plattenelement nach einem der vorstehenden Ansprüche,
**dadurch gekennzeichnet, daß**
eine oder mehrere weitere Lagen (10'') aus einem anderen Material, zum Beispiel Holz, bestehen.

7. Plattenelement nach einem der vorstehenden Ansprüche,
**dadurch gekennzeichnet, daß**
an einer Längsseite (44) eine Nut und an einer gegenüberliegenden Längsseite (44') eine Feder zur Verbindung aneinander angrenzender Plattenelemente (40) angebracht ist.

8. Plattenelement nach einem der vorstehenden Ansprüche,
**dadurch gekennzeichnet**, d a ß
an einer Längsseite (44) eine Stufe und an einer gegenüberliegenden Längsseite (44') eine gegenläufige Stufe zur Verbindung aneinander angrenzender Plattenelemente (40) angebracht ist.

9. Verwendung eines Plattenelements als alternativen Werkstoff zu Holz, Spanplatte, mitteldichte Faserplatte, Hartfaserplatte, Sperrholz, Vollholzplatten, Verbundplatten und Gipskartonplatten usw. im Innenausbau der Möbelfertigung und verwandten Bereichen.
